(19) **Europäisches Patentamt European Patent Office Office européen des brevets**

(11) **EP 3 449 030 B2**

(12) **NOUVEAU FASCICULE DE BREVET EUROPEEN**
Après la procédure d'opposition

(45) Date de publication et mention de la décision concernant l'opposition:
**03.12.2025   Bulletin 2025/49**

(45) Mention de la délivrance du brevet:
**02.06.2021   Bulletin 2021/22**

(21) Numéro de dépôt: 17719929.6

(22) Date de dépôt: 26.04.2017

(51) Classification Internationale des Brevets (IPC):
*C23C 2/00* (2006.01)   *C23C 2/06* (2006.01)
*C23C 2/12* (2006.01)   *C23C 2/20* (2006.01)
*C23C 2/40* (2006.01)   *B32B 15/01* (2006.01)
*C22C 18/04* (2006.01)   *C22C 21/02* (2006.01)
*C22C 21/10* (2006.01)

(52) Classification Coopérative des Brevets (CPC):
C23C 2/06; B32B 15/012; B32B 15/013; C22C 18/04; C22C 21/02; C22C 21/10; C23C 2/0034; C23C 2/00344; C23C 2/12; C23C 2/20; C23C 2/40; C23C 2/523

(86) Numéro de dépôt international:
**PCT/IB2017/052413**

(87) Numéro de publication internationale:
**WO 2017/187364 (02.11.2017 Gazette 2017/44)**

(54) **INSTALLATION DE REVÊTEMENT AU TREMPÉ À CHAUD ET EN CONTINU D'UNE BANDE MÉTALLIQUE ET PROCÉDÉ ASSOCIÉ**

VORRICHTUNG ZUR KONTINUIERLICHEN SCHMELZTAUCHBESCHICHTUNG EINES METALLBANDES UND ZUGEHÖRIGES VERFAHREN

APPARATUS FOR THE CONTINUOUS HOT DIP COATING OF A METAL STRIP, AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  26.04.2016  PCT/IB2016/052358

(43) Date de publication de la demande:
**06.03.2019   Bulletin 2019/10**

(73) Titulaire: **Arcelormittal**
**1160 Luxembourg (LU)**

(72) Inventeurs:
• **SAINT-RAYMOND, Hubert**
**57000 Metz (FR)**

• **VEG, José**
**60870 Brenouille (FR)**
• **DAUCHELLE, Didier**
**60100 Creil (FR)**

(74) Mandataire: **Lavoix**
**2, place d'Estienne d'Orves**
**75441 Paris Cedex 09 (FR)**

(56) Documents cités:
WO-A1-02/38823          WO-A1-2014/173663
WO-A1-2016/148417      JP-A- 2000 265 217
JP-A- 2012 021 206      JP-U- H0 728 958
KR-A- 20130 044 972    KR-B1- 101 533 212
US-A1- 2016 102 393

EP 3 449 030 B2

## Description

L'invention concerne une installation de revêtement au trempé en continu d'une bande métallique.

La demande de brevet EP 1 339 891 décrit une installation de revêtement comprenant une gaine de défilement de la bande métallique sous atmosphère protectrice et dont l'extrémité inférieure est immergée dans le bain de métal liquide pour déterminer avec la surface du bain et à l'intérieur de la gaine, un joint de métal liquide. La gaine délimite, à son extrémité inférieure, au moins deux compartiments de déversement de métal liquide, dans lesquels du métal liquide du bain se déverse à partir du joint liquide afin de nettoyer le joint liquide des impuretés susceptibles de créer des défauts dans le revêtement de la bande. Les parois extérieures de la gaine s'étendent sensiblement parallèlement au plan de passage de la bande sur toute leur longueur, y compris dans la partie délimitant les compartiments de déversement.

Une telle installation ne donne pas entière satisfaction. En effet, les inventeurs de la présente invention ont constaté que, lors de l'utilisation d'une telle installation, il se produisait des projections de métal liquide sur la face de la bande opposée au rouleau de fond, résultant en une qualité de revêtement peu satisfaisante sur cette face de la bande.

Un but de l'invention est donc de fournir une installation de revêtement au trempé en continu permettant d'obtenir des bandes revêtues dont le revêtement présente une faible densité de défauts sur chacune des faces de la bande.

A cet effet, l'invention a pour objet une installation de revêtement selon la revendication 1.

Les revendications 2 à 12 définissent des caractéristiques particulières de l'installation de revêtement.

L'invention concerne également un procédé de revêtement par trempé en continu d'une bande métallique au moyen d'une installation de revêtement telle que définie précédemment.

Les revendications 14 à 24 définissent des caractéristiques particulières du procédé de revêtement.

L'invention sera mieux comprise à la lecture de la description qui va suivre, donnée uniquement à titre d'exemple, et faite en se référant aux dessins annexés, sur lesquels :

- la figure 1 est une vue schématique générale d'une installation de revêtement selon un premier mode de réalisation ;
- la figure 2 est une vue de dessus selon le plan II-II de la figure 1 ;
- la figure 3 est une vue schématique de l'installation de revêtement de la figure 1, illustrant certains aspects de manière plus détaillée ;
- la figure 4 est une vue agrandie d'un détail de la figure 3 ;
- la figure 5 est une vue schématique d'une partie d'une installation de revêtement selon un deuxième mode de réalisation ; et
- la figure 6 est une vue schématique selon III d'une partie de l'installation de revêtement de la figure 5.

Dans ce qui suit, la description sera faite pour une installation de galvanisation en continu d'une bande métallique 1. Mais l'invention s'applique à tout procédé de revêtement par trempé en continu dans lequel apparaît une pollution de surface et pour lequel il faut garder un joint liquide propre.

En particulier, on pourra avantageusement la mettre en œuvre pour le dépôt de revêtements comprenant du zinc et de l'aluminium, notamment de revêtements à base d'aluminium et comprenant du zinc, appelés revêtements Aluminium-Zinc, comprenant par exemple 55% en poids d'aluminium, 43,5% en poids de zinc et 1,5% en poids de silicium, comme l'Aluzinc® vendu par ArcelorMittal ou encore de revêtements à base de zinc et comprenant de l'aluminium, et notamment à base de zinc comprenant 0,1 à 0,3% d'aluminium, appelés revêtements GI ou de revêtement comprenant 5% d'aluminium, le reste étant du zinc et d'éventuelles impuretés.

L'installation peut également être utilisée pour le dépôt de revêtements à base de zinc et comprenant du magnésium, appelés revêtements Zinc-Magnésium ou Zn-Mg. Avantageusement, de tels revêtements comprennent en outre de l'aluminium, et sont alors appelés revêtements Zinc-Aluminium-Magnésium ou Zn-Al-Mg. Avantageusement, l'installation de galvanisation 1 est prévue pour le dépôt de revêtements Zn-Al-Mg comprenant de 0,1 à 20% en poids d'aluminium et de 0,1 à 10% en poids de magnésium.

L'installation 1 peut également être utilisée pour le dépôt de revêtements à base d'aluminium et comprenant du silicium, en particulier pour le dépôt de revêtements présentant la composition suivante :

$$8\% \leq Si \leq 11\%$$

$$2\% \leq Fe \leq 4\%,$$

le reste étant de l'aluminium et d'éventuelles impuretés.

La bande métallique 1 est en particulier une bande réalisée en acier. Cependant, elle pourrait être réalisée dans d'autres matériaux métalliques.

Tout d'abord, à la sortie du train de laminage à froid, la bande métallique 1 passe dans un four de recuit, non représenté, en vue de la recristalliser après l'écrouissage important lié au laminage à froid, et de préparer son état chimique de surface afin de favoriser les réactions chimiques nécessaires à l'opération de galvanisation. Dans ce four, la bande métallique 1 est portée à une température comprise par exemple entre 650 et 900°C.

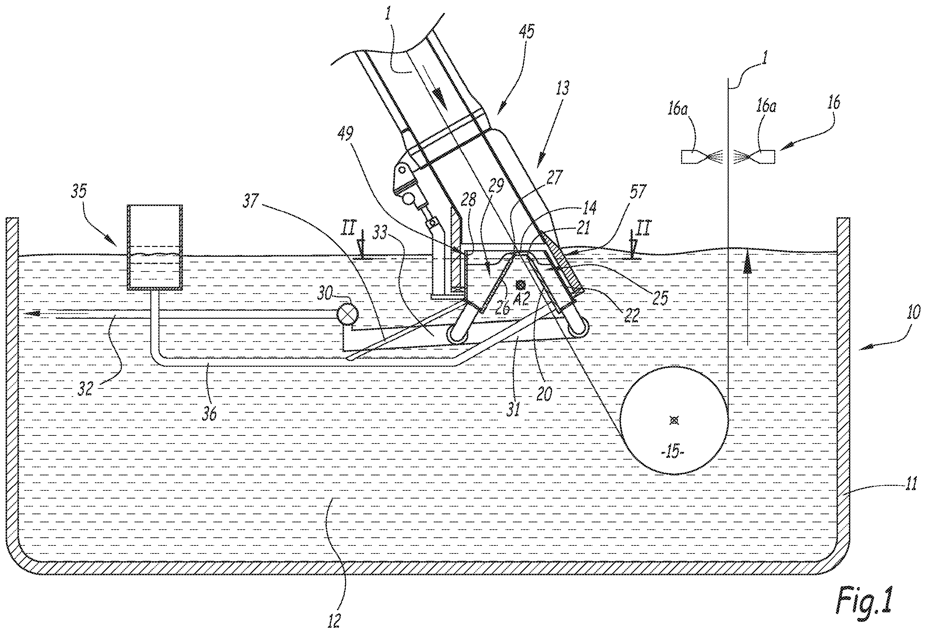

A la sortie du four de recuit, la bande métallique 1 passe dans une installation de galvanisation représentée à la figure 1 et désignée par la référence générale 10.

Cette installation 10 comporte une cuve 11 contenant un bain de métal liquide 12.

La composition du bain de métal liquide 12 dépend de la composition du revêtement que l'on souhaite déposer sur la bande 1. Outre du zinc, du magnésium et/ou de l'aluminium dans des proportions adaptées en fonction du revêtement à déposer, le bain 12 peut également contenir jusqu'à 0,3% en poids d'éléments optionnels additionnels tels que Si, Sb, Pb, Ti, Ca, Mn, Sn, La, Ce, Cr, Ni ou Bi. Ces différents éléments additionnels peuvent notamment permettre d'améliorer la ductilité ou l'adhésion du revêtement métallique sur la bande 1. L'homme du métier, qui connaît leurs effets sur les caractéristiques du revêtement métallique, saura les employer en fonction du but complémentaire recherché. Le bain 12 peut enfin contenir des éléments résiduels provenant des lingots d'alimentation, ou résultant du passage de la bande 1 dans le bain 12, source d'impuretés inévitables dans le revêtement métallique.

La température du bain de métal liquide 12 est généralement comprise entre 400 et 700°C.

A la sortie du four de recuit, la bande métallique 1 est refroidie à une température voisine de celle du bain de métal liquide 12 à l'aide d'échangeurs et est ensuite immergée dans le bain 12.

Ainsi que représenté à la figure 1, l'installation de revêtement 10 comporte une gaine 13 à l'intérieur de laquelle défile la bande métallique 1 sous atmosphère protectrice vis-à-vis du métal dans lequel elle est réalisée.

En cours d'utilisation de l'installation 10, la bande métallique 1 défile à travers la gaine 13 selon un plan de passage prédéfini.

Cette gaine 13 aussi appelée "descente de cloche" ou "trompe" présente, dans l'exemple de réalisation représenté sur les figures, une section transversale rectangulaire.

La gaine 13 est immergée, au niveau de sa partie inférieure, dans le bain 12 de façon à déterminer avec la surface dudit bain 12 et à l'intérieur de cette gaine 13, un joint liquide 14. Ainsi, la bande 1, à l'immersion dans le bain 12 liquide, traverse la surface du joint liquide 14 dans la gaine 13.

La bande métallique 1 est défléchie par un rouleau 15 couramment appelé rouleau de fond et disposé dans le bain 12.

Le plan de passage prédéfini de la bande métallique 1 à travers la gaine 13 est en particulier déterminé par la géométrie du rouleau de fond 15 et d'un rouleau supérieur (non représenté), localisé en amont de la gaine 13, ainsi que par les positions relatives de ces deux rouleaux.

Le rouleau de fond 15 et le rouleau supérieur forment ainsi des moyens de mise en défilement de la bande métallique le long du plan de passage prédéterminé.

A la sortie de ce bain 12, la bande 1 revêtue passe dans des moyens d'essorage 16 qui sont par exemple constitués par des buses 16a de projection de gaz, tel que de l'azote ou de l'air et qui sont dirigées vers chaque face de la bande 1 pour réguler l'épaisseur du revêtement de métal liquide.

Comme cela est représenté sur les figures 1, 3 et 5, la gaine 13 porte, à son extrémité inférieure, un caisson de déversement 49 délimitant deux compartiments 25, 29 de déversement du métal liquide. Les compartiments 25, 29 sont localisés latéralement à l'intérieur de la gaine 13.

Plus particulièrement, le caisson de déversement 49 comprend un compartiment avant 25 de déversement du métal liquide, situé en regard de la face de la bande 1 située du côté du rouleau de fond 15. Ce compartiment avant 25 est délimité intérieurement par une paroi intérieure 20 dirigée vers la surface du joint liquide 14, et extérieurement par une paroi extérieure 22. La paroi extérieure 22 s'étend en regard de la face de la bande 1 située du côté du rouleau de fond 15. Elle est formée par une paroi extérieure du caisson de déversement 49.

L'arête supérieure 21 de la paroi intérieure 20 est positionnée au-dessous de la surface du joint liquide 14 et le compartiment 25 est muni de moyens de maintien du niveau de métal liquide dans ledit compartiment 25 à un niveau au-dessous de la surface du joint liquide 14 pour réaliser un écoulement naturel de métal liquide de cette surface dudit joint 14 vers ce compartiment 25.

De même, le caisson de déversement 49 comprend un compartiment arrière 29 de déversement du métal liquide, situé en regard de la face de la bande 1 placée à l'opposé du rouleau de fond 15. Ce compartiment arrière 29 est délimité intérieurement par une paroi intérieure 26 dirigée vers la surface du joint liquide 14 et extérieurement par une paroi extérieure 28. La paroi extérieure 26 s'étend en regard de la face de la bande 1 située à l'opposé du rouleau de fond 15. Elle est formée par une paroi extérieure du caisson de déversement 49.

L'arête supérieure 27 de la paroi intérieure 26 est positionnée au-dessous de la surface du joint liquide 14 et le compartiment 29 est muni de moyens de maintien du niveau de métal liquide dans ledit compartiment 29 à un niveau au-dessous de la surface du joint liquide 14 pour réaliser un écoulement naturel de métal liquide de cette surface dudit joint liquide 14 vers ce compartiment 29.

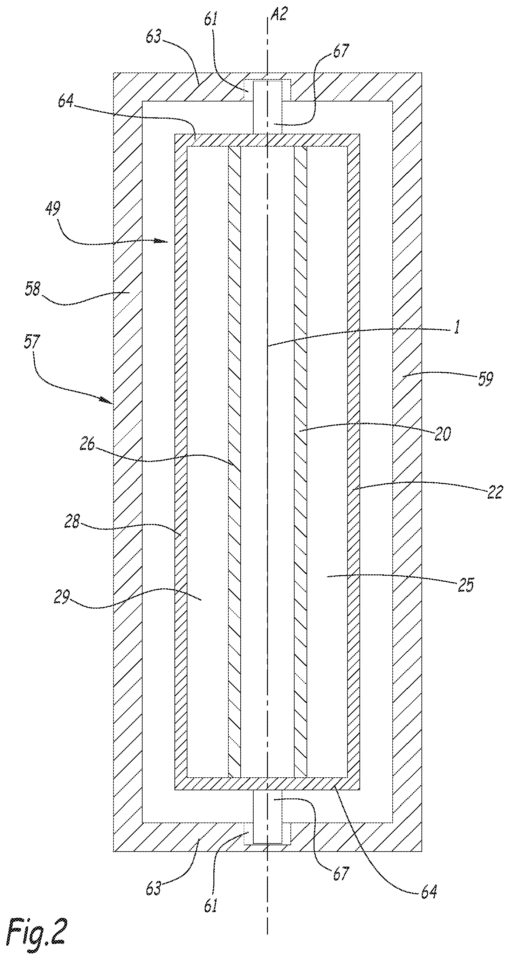

Comme cela est visible sur la figure 2, les parois extérieures 22, 28 sont reliées entre elles par des parois latérales 64 s'étendant en regard des tranches de la bande 1.

Dans l'ensemble de la description qui va suivre, ces deux compartiments 25, 29 communiquent l'un avec l'autre pour constituer un compartiment périphérique unique. Il est bien sûr tout à fait possible de les dissocier au moyen de parois latérales mais aussi d'ajouter des compartiments latéraux en regard des tranches de la bande 1 à revêtir.

Avantageusement, la hauteur de chute du métal liquide dans les compartiments 25 et 29, c'est-à-dire la distance selon une direction verticale entre les arêtes supérieures 21, 27 et le niveau de métal liquide dans les compartiments 25, 29, est déterminée pour empêcher la remontée des particules d'oxyde de métal et de composés intermétalliques à contre-courant de l'écoulement du métal liquide. Cette hauteur de chute peut être supérieure ou égale à 40 mm, voire supérieure ou égale à 50 mm et de préférence supérieure ou égale à 100 mm.

Comme illustré sur la figure 1, les moyens de maintien du niveau de métal liquide dans les compartiments de déversement 25 et 29 comprennent au moins une pompe 30 raccordée du côté aspiration audit compartiment 25 et 29 par une tubulure d'aspiration, respectivement 31 et 33. La pompe 30 est munie du côté du refoulement d'une tubulure de refoulement 32, configurée pour refouler le métal liquide prélevé par la pompe 30 dans le volume du bain 12.

Par ailleurs, l'installation 10 comporte des moyens de détection du niveau de métal liquide dans les compartiments de déversement 25, 29.

Avantageusement, ces moyens de détection sont formés par un réservoir 35 disposé à l'extérieur de la gaine 13 et des compartiments 25, 29, et relié à la base de chacun des compartiments 25 et 29 par une tuyauterie de raccordement, respectivement 36 et 37. Dans un autre mode de réalisation, on pourra utiliser une tuyauterie de raccordement unique.

Comme représenté à la figure 1, le point de raccordement de la pompe 30 sur les compartiments de déversement 25 et 29 est situé au-dessus du point de raccordement du réservoir 35 sur lesdits compartiments 25 et 29.

L'ajout du réservoir externe 35 permet de reporter le niveau des compartiments de déversement 25 et 29 à l'extérieur de la gaine 13 dans un environnement propice de façon à détecter facilement ce niveau. A cet effet, le réservoir 35 peut être équipé d'un détecteur de niveau de métal liquide, comme par exemple un contacteur alimentant un voyant, un radar ou un faisceau laser.

En variante, tout autre moyen permettant de détecter le niveau de métal liquide dans les compartiments de déversement 25, 29 peut être utilisé.

La détection en continu du niveau de métal liquide dans les compartiments de déversement 25 et 29 permet d'ajuster ce niveau de manière à le maintenir au-dessous de la surface de joint liquide 14, en respectant avantageusement la hauteur de chute décrite ci-dessus.

Avantageusement, la pompe 30 est réglée à un débit constant prédéterminé et l'ajustement du niveau de métal liquide est réalisé en introduisant des lingots métalliques dans la cuve 11 lorsque le niveau de métal liquide détecté est inférieur à un niveau prédéterminé. Il est également possible d'utiliser une pompe à débit variable qui permet, en combinaison avec les moyens de détection du niveau de métal liquide dans les compartiments de déversement 25, 29, un ajustement plus rapide des conditions de galvanisation.

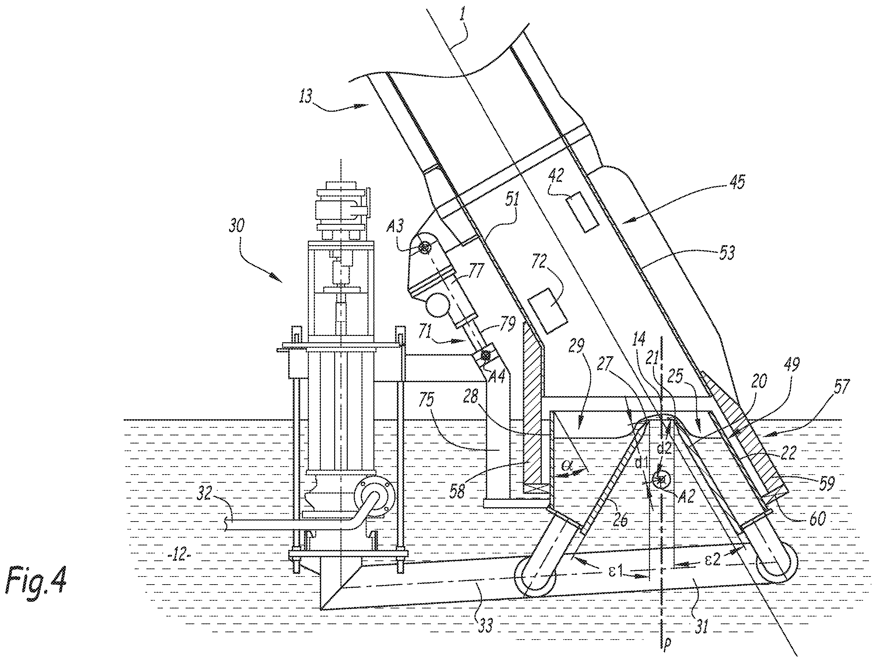

Comme on peut le voir en figure 4, la gaine 13 comprend une partie supérieure 45 et une partie inférieure 57 immergée au moins partiellement dans le bain de métal liquide 12.

Dans l'exemple représenté, la partie supérieure 45 comprend deux parois latérales 51, 53 sensiblement parallèles entre elles, et sensiblement parallèles au plan de passage de la bande 1.

Le caisson de déversement 49 est porté par la partie inférieure 57 de la gaine 13. Plus particulièrement, comme cela est représenté sur la figure 4, le caisson de déversement 49 est inséré dans l'extrémité inférieure de la partie inférieure 57 en s'étendant en partie à l'intérieur de la gaine 13. Il fait saillie inférieurement au-delà de l'extrémité inférieure de la gaine 13.

Avantageusement, l'installation 10 comprend un joint d'étanchéité 60 agencé entre l'extrémité inférieure de la gaine 13 et le caisson de déversement 49 de sorte à éviter la pénétration de métal liquide du bain 12 entre ces deux éléments. A titre d'exemple, le joint d'étanchéité 60 est formé par un soufflet solidarisé au caisson de déversement 49 par l'une de ses extrémités, et en particulier par son extrémité inférieure, et à la gaine 13 par l'autre de ses extrémités, en particulier par son extrémité supérieure. Un tel soufflet est par exemple réalisé en acier. Un tel soufflet permet de réaliser l'étanchéité entre le caisson de déversement 49 et la gaine 13 tout en autorisant une rotation relative entre ces deux pièces.

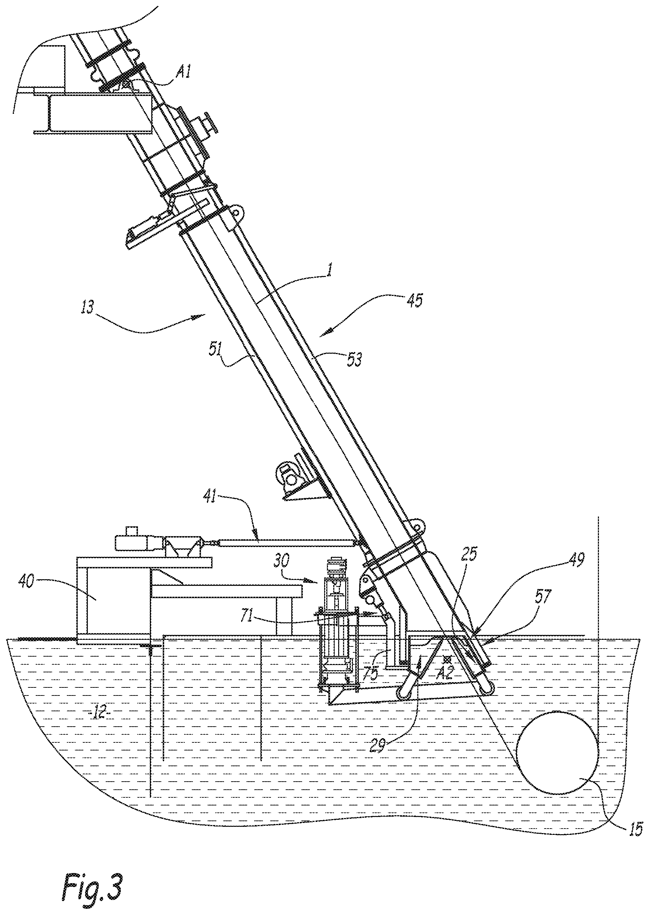

Comme cela est représenté sur la figure 3, la gaine 13 et le caisson de déversement 49 sont mobiles en rotation conjointement autour d'un premier axe de rotation A1. Le caisson de déversement 49 et la gaine 13 sont solidaires en rotation autour du premier axe de rotation A1. Le premier axe de rotation A1 est sensiblement horizontal.

La rotation de la gaine 13 et du caisson de déversement 49 autour du premier axe de rotation A1 résulte en une modification de la distance entre les arêtes supérieures 21, 27 des compartiments de déversement 25, 29 et la bande métallique 1, et permet ainsi un positionnement de la bande 1 par rapport à ces arêtes 21, 27.

Le caisson de déversement 49 est en outre mobile en rotation par rapport à la partie supérieure 45 de la gaine 13 autour d'un deuxième axe de rotation A2. Le deuxième axe de rotation A2 est sensiblement horizontal.

Plus particulièrement, comme cela est représenté sur la figure 2, le deuxième axe de rotation A2 est orienté de sorte à traverser les parois de la gaine 13.

En particulier, la distance d1, d2 entre le deuxième axe de rotation A2 et chacune des arêtes 21, 27 des compartiments de déversement 25, 29 est inférieure ou égale à 2500 mm. Cette distance est avantageusement comprise entre 0 mm et 400 mm.

Dans ce mode de réalisation, le deuxième axe de rotation A2 est localisé en-dessous des arêtes supérieures 21, 27.

Le premier et le deuxième axe de rotation A1, A2 sont parallèles entre eux.

La rotation du caisson de déversement 49 autour du second axe de rotation A2 permet de régler l'horizontalité du caisson de déversement 49 indépendamment du mouvement de rotation éventuellement effectué autour du premier axe de rotation A1 par l'ensemble constitué de la gaine 13 et du caisson de déversement 49.

La localisation particulière du deuxième axe de rotation A2 permet d'effectuer ce réglage moyennant des débattements particulièrement faibles, et en particulier de l'ordre de quelques degrés.

On considère que le caisson de déversement 49 est horizontal lorsque les arêtes supérieures 21, 27 sont localisées dans un même plan horizontal défini avec une tolérance de plus ou moins 5 mm. En d'autres termes, une différence d'altitude maximale de 10 mm est tolérée entre les deux arêtes supérieures 21 et 27.

En option, la gaine 13 est également déplaçable en translation le long de son axe longitudinal de sorte à ajuster sa hauteur d'immersion dans le bain de métal liquide 12, en utilisant, par exemple un système de soufflet. Un tel mécanisme d'ajustement est connu et ne sera pas détaillé dans le cadre de cette demande de brevet.

L'installation 10 comprend également un mécanisme d'ajustement de l'horizontalité des arêtes supérieures 21, 27. Plus particulièrement, le mécanisme d'ajustement de l'horizontalité des arêtes supérieures 21, 27 est configuré pour ajuster l'horizontalité du deuxième axe de rotation A2.

Plus particulièrement, le caisson de déversement 49 est articulé sur la gaine 13 par l'intermédiaire d'une liaison pivot autorisant la rotation du caisson de déversement 49 par rapport à la gaine 13 autour du deuxième axe de rotation A2. Une telle liaison pivot comprend un pivot, par exemple sous la forme d'un arbre, tronçon d'arbre ou tourillon reçu dans un palier, le pivot s'étendant selon le deuxième axe de rotation A2. Le pivot est formé sur la gaine 13.

Comme cela est illustré sur les figures 1 à 4, le caisson de déversement 49 forme une pièce distincte de la gaine 13. Il est monté rotatif sur la partie inférieure 57 de la gaine 13. Comme on peut le voir en figure 2, le caisson de déversement 49 est monté rotatif sur la partie inférieure 57 de la gaine 13 par l'intermédiaire de tourillons 67, reçus à rotation dans des paliers de guidage en rotation 61. Les tourillons 67 définissent l'axe de rotation A2.

Dans l'exemple représenté, les tourillons 67 sont formés sur le caisson de déversement 49 et les paliers 61 sont formés sur la gaine 13. Plus particulièrement, les paliers de guidage en rotation 61 sont formés dans la partie inférieure 57 de la gaine 13, en étant disposés sur deux faces 63 opposées de la gaine 13.

Ils sont sensiblement coaxiaux avec l'axe A2. Chaque palier de guidage 61 reçoit un tourillon 67 respectif formé sur le caisson de déversement 49.

En variante, les tourillons 67 sont formés sur la gaine 13, et plus particulièrement dans sa partie inférieure 57, et les paliers de guidage 61 sont formés sur le caisson de déversement 49.

Dans l'installation 10 selon le premier mode de réalisation, le deuxième axe de rotation A2 est immergé dans le bain de métal liquide 12. Plus particulièrement, le deuxième axe de rotation A2 passe entre les deux compartiments de déversement 25, 29, en étant disposé au-dessous des arêtes supérieures 21, 27 des compartiments de déversement 25, 29. Un tel positionnement du deuxième axe de rotation A2 est avantageux, car il résulte en un rayon de rotation des arêtes supérieures 21, 27 autour du deuxième axe de rotation relativement faible, ce qui facilite le réglage précis de l'horizontalité du caisson de déversement 49.

Comme on peut le voir en figure 3, l'installation 10 comprend un premier actionneur 41, configuré pour déplacer la gaine 13 en rotation autour du premier axe de rotation A1 par rapport à la bande 1.

Dans l'exemple représenté, le premier actionneur 41 se présente sous la forme d'un vérin d'actionnement. Ce vérin d'actionnement est disposé entre un bâti fixe 40 de l'installation 10 et la gaine 13, plus particulièrement la partie supérieure 45 de la gaine 13. Comme cela est illustré sur les figures 3 et 4, le premier actionneur 41 agit sur la gaine 13 au niveau de l'extrémité inférieure de la partie 45.

A titre d'exemple, le premier actionneur 41 est formé par un vérin à vis. Cependant, en alternative, le premier actionneur 41 est de tout autre type adapté, et comprend par exemple un vérin hydraulique ou pneumatique.

Comme on peut le voir en figure 4, l'installation 10 comprend avantageusement en outre un outil de visualisation 42 de la distance relative entre chacune des arêtes supérieures 21, 27 des compartiments de déversement 25, 29 et la bande métallique 1. Plus particulièrement, l'outil de visualisation 42 comprend une caméra agencée dans la gaine 13 de sorte à permettre la visualisation simultanée des arêtes supérieures 21, 27 et de la tranche de la bande 1. Cet outil de visualisation 42 a été représenté seulement schématiquement sur la figure 4.

Selon un mode de réalisation, l'installation 10 comprend des moyens de commande (non représentés), configurés pour commander le premier actionneur 41 à partir des positions relatives des arêtes supérieures 21, 27 et de la bande 1 déterminées au moyen de l'outil de visualisation 42.

L'installation 10 comprend en outre un deuxième actionneur 71, configuré pour déplacer le caisson de déversement 49 en rotation autour du deuxième axe de rotation A2 par rapport à la gaine 13.

Dans le mode de réalisation représenté sur les figures 3 et 4, le deuxième actionneur 71 se présente sous la forme d'un vérin d'actionnement, et notamment d'un vérin à vis. Cependant, en alternative, le deuxième actionneur 71 est de tout autre type adapté, et comprend par exemple un vérin hydraulique.

Avantageusement, l'installation 10 comprend en outre un capteur de mesure 72 configuré pour mesurer l'angle d'inclinaison du caisson de déversement 49 par rapport à l'horizontale. Ce capteur de mesure 72 a été représenté seulement schématiquement sur la figure 4.

En option, l'installation 10 comprend également des moyens de commande (non représentés) du deuxième actionneur 71, configurés pour commander le deuxième actionneur 71 en fonction de l'angle d'inclinaison mesuré par le capteur de mesure 72. Plus particulièrement, ces moyens de commande sont configurés pour commander la rotation du caisson de déversement 49 par rapport à la gaine 13 autour du deuxième axe de rotation A2 jusqu'à ce que le caisson de déversement 49 soit orienté horizontalement, c'est-à-dire jusqu'à ce que les arêtes supérieures 21, 27 soient localisées dans un même plan horizontal.

Comme cela est illustré sur les figures 3 et 4, l'installation 10 comprend un châssis de support 75 du caisson de déversement 49, ainsi que de la pompe 30 et des conduits associés à la pompe 30.

Le châssis de support 75 est solidaire en rotation de la gaine 13 autour du premier axe de rotation A1. Il est en outre solidaire en rotation du caisson de déversement 49 autour du deuxième axe de rotation A2.

La pompe 30 est montée fixe sur ce châssis de support 75. Comme cela a été expliqué précédemment, la pompe 30 est reliée aux compartiments de déversement 25, 29 par l'intermédiaire de tubulures d'aspiration 31 et 33. Ces tubulures d'aspiration 31, 33 sont des conduits rigides, montés fixes sur le caisson de déversement 49 et sur la pompe 30. La tubulure de refoulement 32 est également formée par un conduit rigide monté fixe sur la pompe 30. Les tubulures d'aspiration 31, 33 et la tubulure de refoulement 32 sont solidaires en rotation du caisson de déversement 49 et de la pompe 30.

Lorsque l'installation 10 comprend un réservoir 35 de visualisation du niveau de métal liquide dans les compartiments de déversement 25, 29 tel que défini précédemment, ce dernier est avantageusement monté fixe par rapport au châssis de support. Ainsi, le réservoir 35 de visualisation est solidaire en rotation du châssis de support. On notera que, pour des raisons de simplification des figures 3 et 4, le réservoir de visualisation 35 a été omis sur cette figure.

Dans l'exemple représenté sur les figures 3 et 4, le châssis de support 75 est relié à la gaine 13 par l'intermédiaire du vérin 71 d'entraînement en rotation du caisson de déversement 49. Comme cela est illustré plus particulièrement sur la figure 4, dans ce mode de réalisation particulier, le corps 77 du vérin d'entraînement 71 est monté pivotant par rapport à la gaine 13 autour d'un axe de rotation A3 parallèle à l'axe de rotation A2, et la tige 79 du vérin d'entraînement 71 est reliée au châssis de support 75 en étant mobile à rotation par rapport au châssis de support 75 autour d'un axe de rotation A4 parallèle à l'axe de rotation A2. Ainsi, la variation de la longueur du vérin 71 engendre le pivotement du châssis de support 75 et du caisson de déversement 49 autour de l'axe de rotation A2.

La forme des compartiments de déversement 25 et 29 sera maintenant expliquée plus en détail en regard de la figure 4.

Dans l'installation 10 illustrée sur les figures 1 à 4, la paroi extérieure 28 du compartiment de déversement arrière 29 forme, dans une configuration d'utilisation de l'installation de revêtement 10, un angle $\alpha$ supérieur ou égal à 15°, et avantageusement supérieur ou égal à 25°, voire supérieure ou égal à 30°. En effet, on a observé que plus l'angle augmente, plus l'efficacité augmente également.

On entend par configuration d'utilisation la configuration de l'installation de revêtement 10 lorsque la bande métallique 1 défile à travers l'installation 10 afin d'être revêtue en passant dans le bain de métal liquide 12.

En particulier, dans la configuration d'utilisation, les deux arêtes supérieures 21, 27 des deux compartiments de déversement 25, 29 sont situées dans un même plan horizontal.

Les inventeurs de la présente invention ont constaté qu'une telle configuration de la paroi extérieure 28 est particulièrement avantageuse. En particulier, elle permet d'obtenir, du côté de la face de la bande métallique 1 en regard du compartiment de déversement 29, un revêtement présentant une très faible densité de défauts, tout en limitant l'encombrement de l'installation de revêtement 10.

En effet, ils ont constaté que lorsque la paroi extérieure 28 du compartiment de déversement arrière 29 est orientée parallèlement à la bande métallique 1, une partie du métal liquide se déversant en cascade dans le compartiment de déversement 29 à partir de la surface de joint de métal liquide 14 tombe sur la paroi extérieure 28 du compartiment de déversement 29, puis est projetée sur la face de la bande 1 en regard du compartiment de déversement 29, créant ainsi des défauts d'aspect sur cette face de la bande 1. Ce phénomène d'éclaboussures résulte du fait que la paroi extérieure 28 s'étend approximativement perpendiculairement à la direction de chute d'au moins une partie de ladite cascade de métal liquide.

Au contraire, l'orientation de la paroi extérieure 28 telle que décrite ci-dessus permet de réduire de telles projections, et aboutit donc à une meilleure qualité d'aspect de la face concernée de la bande 1. En effet, dans ce cas, la paroi extérieure 28 s'étend davantage tangentiellement à la direction générale d'écoulement de la cascade de métal liquide.

Comme cela est illustré sur les figures 1 à 4, la paroi extérieure 28 du compartiment de déversement arrière 29 est orientée de sorte à s'écarter du plan de passage de la bande 1 depuis son extrémité supérieure en direction du fond du compartiment de déversement arrière 29.

L'angle $\alpha$ entre la paroi extérieure 28 et le plan de passage de la bande 1 est supérieur ou égal à 15° et peut être inférieur, supérieur ou égal à $\alpha_0$, où $\alpha_0$ est l'angle entre le plan de passage de la bande 1 et la verticale, sachant que le risque d'éclaboussures est d'autant plus faible que l'angle $\alpha$ est élevé.

A titre d'exemple, la paroi extérieure 28 forme avec le plan de passage de la bande 1 un angle $\alpha$ compris entre $\alpha_0$ - 10° et $\alpha_0$ + 50°, et plus particulièrement compris entre $\alpha_0$ et $\alpha_0$ + 45°.

Toutes choses étant égales par ailleurs, le risque d'éclaboussures est minimal lorsque la paroi extérieure 28 forme avec la bande 1 un angle $\alpha$ strictement supérieur à l'angle $\alpha_0$ du plan de passage de la bande 1 avec la verticale.

De préférence, la bande 1 forme avec la verticale un angle $\alpha_0$ compris entre 25° et 50°. A titre d'exemple, la bande 1 forme avec la verticale un angle $\alpha_0$ environ égal à 30°.

Avantageusement, la paroi intérieure 26 du compartiment de déversement 29 est inclinée, à partir de son arête supérieure 27 en direction du fond du compartiment 29, à l'écart d'un plan vertical médian P entre les deux arêtes 21, 27. En d'autres termes, la paroi intérieure 26 du compartiment de déversement 29 est inclinée de sorte à s'écarter d'un plan vertical passant par l'arête supérieure 27 depuis son arête supérieure 27 en direction du fond du compartiment 29. Elle forme avec la verticale un angle $\varepsilon1$ strictement supérieur à zéro, comme cela est représenté plus particulièrement sur la figure 4.

En effet, les inventeurs de la présente invention ont constaté qu'une telle inclinaison permettait de guider l'écoulement du métal liquide dans le compartiment de déversement 29 globalement le long de la paroi intérieure 26 et de réduire ainsi les risques de projections sur la bande 1.

Une inclinaison selon un angle $\varepsilon1$ supérieur ou égal à 15° est particulièrement avantageuse pour réduire les risques de projections. A titre d'exemple, l'angle $\varepsilon1$ est supérieur ou égal à 20°, et plus particulièrement supérieur ou égal à 25°.

Au contraire, lorsque la paroi intérieure 26 est inclinée à l'opposé de l'inclinaison représentée sur les figures de la présente demande de brevet, c'est-à-dire en s'approchant dudit plan vertical médian P en direction du fond du compartiment 29 ou lorsque la paroi intérieure 26 est verticale, une partie du métal liquide se déversant dans le compartiment 29 risque de tomber sensiblement verticalement directement dans le bain de métal liquide contenu dans le compartiment de déversement 29, ce qui augmente les risques de projections de métal liquide sur la bande 1.

La paroi extérieure 22 du compartiment de déversement avant 25 est orientée sensiblement parallèlement au plan de passage de la bande 1. Dans le cas du compartiment de déversement 25, qui est situé du côté de la face de la bande 1 placée en regard du rouleau de fond 15, cette orientation permet d'éviter les projections sur la bande 1, la paroi extérieure 22 s'étendant sensiblement tangentiellement à la direction générale d'écoulement de la cascade de métal liquide se déversant dans le compartiment 25.

Avantageusement, la paroi intérieure 20 du compartiment de déversement 25 est inclinée, à partir de son arête supérieure 21 et en direction du fond du compartiment 25, à l'écart du plan vertical médian P défini précédemment comme cela est représenté plus particulièrement sur la figure 4. En d'autres termes, la paroi intérieure 26 du compartiment de déversement 25 est inclinée de sorte à s'écarter d'un plan vertical passant par l'arête supérieure 21 depuis son arête supérieure 21 en direction du fond du compartiment 25. Elle forme avec la verticale un angle $\varepsilon2$ strictement supérieur à zéro.

Une telle inclinaison permet de guider l'écoulement du métal liquide dans le compartiment de déversement 25 globalement le long de la paroi intérieure 20 et de réduire ainsi les risques de projections sur la bande 1. Une inclinaison selon un angle $\varepsilon2$ supérieur ou égal à 15° est particulièrement avantageuse pour réduire les risques de projections.

De préférence, l'angle $\varepsilon2$ est strictement supérieur à l'angle $\alpha_0$ formé entre le plan de passage de la bande 1 et la verticale afin d'éviter que la bande 1 ne frotte la paroi intérieure 20 lors de son défilement à travers l'installation 10. Par exemple, l'angle $\varepsilon2$ est supérieur d'au moins 3° à l'angle $\alpha_0$. A titre d'exemple, lorsque la bande 1 forme un angle $\alpha_0$ d'environ 30° avec la verticale, l'angle $\varepsilon2$ est avantageusement environ égal à 35°. Un tel angle permet également d'assurer un bon guidage du métal liquide le long de la paroi intérieure 20.

Selon un mode de réalisation, les angles $\varepsilon1$ et $\varepsilon2$ sont identiques. Ils sont par exemple environ égaux à 35°.

Les parois intérieures 20, 26 et extérieure 28 des compartiments de déversement 25, 29 sont généralement sensiblement planes. Les valeurs d'inclinaison mentionnées ci-dessus sont définies par rapport au plan moyen des parois concernées.

Les angles a, $\varepsilon1$ et $\varepsilon2$ sont définis dans la configuration d'utilisation de l'installation de revêtement.

Comme cela est illustré sur les figures 1, 3 et 4, les parois intérieures 20 et 26 sont de préférence effilées au niveau de leurs arêtes supérieures 21, 27 pour faciliter un écoulement le long de la paroi 20, 26 et éviter d'éclabousser la bande 1.

A titre d'exemple, les arêtes supérieures 21 et 27 des parois intérieures 20 et 26 des compartiments de déversement 25 et 29 comportent, dans le sens longitudinal, une succession de creux et de saillies en forme d'arc de cercle.

Dans le mode de réalisation illustré sur les figures 1 à 4, dans lequel la partie inférieure 57 de la gaine 13 s'étend partiellement en regard du caisson de déversement 49, la paroi latérale 58 de la partie inférieure 57 de la gaine 13 est, à titre d'exemple, parallèle à la paroi extérieure 28 du compartiment de déversement arrière 29 dans sa partie située en regard de ladite paroi extérieure 28. Ainsi, cette paroi latérale 58 forme un angle avec la paroi latérale 51 de la partie supérieure 45, qui s'étend sensiblement parallèlement au plan de passage de la bande métallique 1. Une telle configuration permet de limiter l'encombrement de la gaine 13.

Avantageusement, la paroi extérieure 22 du compartiment de déversement 25 et la paroi latérale 59 de la partie inférieure 57 de la gaine 13 située en regard de cette paroi extérieure 22 sont parallèles. Une telle configuration contribue également à limiter l'encombrement de la gaine 13. Plus particulièrement, dans l'exemple représenté sur les figures 1 à 4, la paroi extérieure 22 du compartiment de déversement avant 25 s'étend sensiblement parallèlement au plan de passage de la bande 1. La paroi latérale 59 de la partie inférieure 57 s'étend dans le prolongement de la paroi latérale 53 de la partie supérieure 45 et s'étend sensiblement parallèlement au plan de passage de la bande 1.

Les parois extérieures 22, 28 des compartiments de déversement 25, 29 s'étendent latéralement intérieurement par rapport aux parois latérales 58, 59 de la partie inférieure 57.

L'installation 10 selon l'invention permet d'obtenir des bandes métalliques 1 revêtues présentant une densité de défauts considérablement réduite sur chacune de leurs faces, et la qualité d'aspect ainsi obtenue de ce revêtement convient aux critères exigés par des clients désirant des pièces dont les surfaces sont sans défauts d'aspect.

En effet, grâce à la présence des deux compartiments de déversement 25, 29 de part et d'autre de la bande 1 et au système de maintien d'un niveau adéquat de métal liquide dans ces compartiments 25, 29, la surface de joint liquide 14 est nettoyée en permanence et de chaque côté de la bande 1 des oxydes de zinc et des mattes susceptibles d'y surnager et qui pourraient créer des défauts d'aspect dans le revêtement.

Par ailleurs, le caractère pivotant dans son ensemble de la gaine 13 et du caisson de déversement 49 autour du premier axe de rotation A1 et le montage à pivotement du caisson de déversement 49 sur la gaine 13 autour du deuxième axe de rotation A2 permettent de minimiser les défauts d'aspect du revêtement sur les deux faces de la bande 1 indépendamment de la position ou des caractéristiques du rouleau de fond 15, et en particulier en cas de changement des caractéristiques ou de la position de ce rouleau 15.

En effet, la ligne de passage de la bande 1 à travers la gaine 13 est déterminée par la position du rouleau de fond 15 dans le bain de métal liquide 12, ainsi que par le diamètre du rouleau de fond 15. Ainsi, chaque changement du rouleau de fond 15 est susceptible de modifier la ligne de passage de la bande 1 dans la gaine 13, et donc de décentrer les compartiments de déversement 25, 29 par rapport à la bande 1. De la même manière, l'usure du rouleau de fond 15 au cours du fonctionnement de l'installation 1, qui résulte en une réduction de son diamètre, se traduit également par une modification de la ligne de passage de la bande 1 dans la gaine 13, et donc par un décentrage des compartiments de déversement 25, 29 par rapport à la bande 1.

Or, il est important que la ligne de passage de la bande 1 se trouve sensiblement centrée entre les deux compartiments de déversement 25, 29. En effet, à défaut, la bande 1 risque de toucher les parois intérieures 20, 26 de ces compartiments 25, 29 lors de son défilement à travers la gaine 13.

Le pivotement de la gaine 13 et du compartiment de déversement 49 autour du premier axe de rotation A1 permet de recentrer les compartiments de déversement 25, 29 par rapport à la bande 1 en cas de modification des caractéristiques ou de la position du rouleau de fond 15.

Cependant, les inventeurs de la présente invention ont constaté qu'un tel centrage par rotation autour de l'axe de rotation A1 présentait l'inconvénient de modifier l'altimétrie des arêtes supérieures 21, 27. En d'autres termes, la rotation de la gaine 13 autour de l'axe de rotation A1 engendre une rotation des arêtes supérieures 21, 27 des compartiments 25, 29 autour de l'axe de rotation A1, et l'une de ces arêtes 21, 27 se retrouve alors à une altitude supérieure à l'autre. Or, une telle différence d'altitude doit être contrôlée, car une différence d'altitude non contrôlée risque de résulter en un déséquilibrage des débits de déversement dans les compartiments 25, 29 depuis la surface de joint liquide 14. A débit de pompe 30 constant, un tel déséquilibre des débits risque de conduire à un débordement de l'un des compartiments 25, 29, les mattes et oxydes stockés dans ce compartiment 25, 29 se retrouvant alors au contact de la bande 1, et risquant ainsi de nuire à la qualité du revêtement.

L'installation 10 telle que décrite ci-dessus permet de remédier à cet inconvénient grâce à la possibilité d'un pivotement du caisson de déversement 49 par rapport à la gaine 13 autour du deuxième axe de rotation A2, un tel pivotement permettant de rétablir l'horizontalité du caisson de déversement 49 et résultant ainsi en un rééquilibrage des débits de déversement dans chacun des compartiments 25, 29.

De plus, le fait de prévoir que la gaine 13 et le caisson de déversement 49 soient réalisés en deux pièces distinctes, la gaine 13 et le caisson de déversement étant solidaires en rotation autour du premier axe de rotation A1 en vue de réaliser le centrage de la bande 1, et le caisson de déversement 49 étant monté à rotation autour de l'axe de rotation A2 par rapport à la gaine 13 par l'intermédiaire d'un palier définissant précisément la position de l'axe de rotation A2 par rapport à la gaine 13, permet de réaliser très précisément et de manière indépendante, d'une part le centrage du caisson de déversement 49 par rapport à la bande métallique 1 et d'autre part l'équilibrage des débits entre les deux compartiments de déversement 25, 29.

En particulier, le mécanisme décrit en regard du premier mode de réalisation est bien plus simple et permet de réaliser le positionnement de la gaine 13 par rapport à la bande 1 et l'équilibrage des débits de manière bien plus précise et flexible que les structures décrites dans les demandes de brevet antérieures WO 02/38823 et KR 10-1533212.

Des expériences réalisées par les inventeurs ont montré que de faibles débattements angulaires autour du premier et du deuxième axe de rotation A1, A2, en particulier de l'ordre de quelques degrés, sont suffisants pour obtenir un réglage satisfaisant de l'installation de revêtement 10.

Le faible débattement angulaire en rotation autour du premier axe de rotation A1 est avantageux dans la mesure où l'installation de revêtement 10 est généralement localisée dans un environnement encombré, n'autorisant pas de débattements angulaires importants de la gaine 13 dans son ensemble.

Par ailleurs, le débattement angulaire faible nécessaire pour la rotation du caisson de déversement 49 permet d'autoriser le rééquilibrage, tout en maintenant une bonne étanchéité entre le caisson de déversement 49 et la gaine 13, en prévoyant simplement entre le caisson de déversement 49 et la gaine 13 un joint d'étanchéité 60 suffisamment déformable pour autoriser le débattement angulaire du caisson de déversement 49.

Au contraire, dans les installations décrites dans WO 02/38823 et dans KR 10-1533212, qui ne comprennent pas d'axe de rotation distinct du caisson de déversement 49 par rapport à une partie supérieure de la gaine 13, des débattements bien plus importants seront nécessaires pour obtenir le réglage désiré.

La mise en œuvre d'un axe de rotation A2 distinct du caisson de déversement 49 par rapport à une partie supérieure de la gaine 13 selon l'invention élargit en outre le domaine du réglage par rapport aux installations décrites dans WO 02/38823 et dans KR 10-1533212. En effet, dans les installations antérieures, l'angle de réglage possible est limité par l'angle maximal possible de rotation de la gaine autour de l'axe de rotation unique en fonction de la position de la bande et des contraintes du système.

Un procédé de revêtement au trempé en continu d'une bande métallique 1 au moyen de l'installation 10 selon le premier mode de réalisation va maintenant être expliqué.

Ce procédé comprend le réglage de l'installation de revêtement 10, notamment après un changement du rouleau de fond 15.

Au cours d'une étape de réglage de la position du caisson de déversement 49 par rapport à la bande métallique 1, et plus particulièrement de centrage de ce caisson 49 par rapport à la bande métallique 1, la gaine 13 est déplacée en rotation autour du premier axe de rotation A1 de sorte à centrer la bande métallique 1 par rapport aux arêtes supérieures 21, 27 des compartiments de déversement 25, 29.

Avantageusement, au cours de cette étape, la position relative des arêtes supérieures 21 et 27 par rapport à la bande métallique 1 est détectée grâce à l'outil de visualisation 42 et le déplacement de la gaine 13 est commandé en fonction de la position ainsi déterminée.

Selon un mode de réalisation, le déplacement en rotation de la gaine 13 est commandé par un opérateur agissant sur le premier actionneur 41 en fonction de la position respective des arêtes supérieures 21 et 27 et de la bande métallique 1 déterminée au moyen de l'outil de visualisation 42. L'opérateur peut être une personne physique ou un automatisme.

En variante, le positionnement du caisson de déversement 49 par rapport à la bande 1 est réalisé automatiquement par des moyens de commande configurés pour commander le premier actionneur 41 à partir des positions relatives déterminées par l'intermédiaire de l'outil de visualisation 42.

Au cours d'une étape de rééquilibrage, consécutive à l'étape de réglage, le caisson de déversement 49 est entraîné en rotation par rapport à la partie supérieure 45 de la gaine 13 autour du deuxième axe de rotation A2 de sorte à rendre le caisson de déversement 49 horizontal.

Plus particulièrement, au cours de cette étape, le caisson de déversement 49 est entraîné en rotation autour du deuxième axe de rotation A2 par rapport à la partie inférieure 57 de la gaine 13.

Selon un mode de réalisation, au cours de cette étape, les moyens de commande commandent la rotation du caisson de déversement 49 en fonction des mesures réalisées par le capteur d'inclinaison 72.

En variante, cette rotation est commandée par un opérateur agissant sur le deuxième actionneur 71 en fonction de l'inclinaison mesurée par le capteur d'inclinaison 72 ou constatée par l'opérateur.

A l'issue de cette deuxième étape, la bande 1 est sensiblement centrée par rapport aux arêtes supérieures 21, 27 et ces arêtes 21, 27 sont disposées dans un même plan horizontal.

Eventuellement, si le positionnement n'est pas satisfaisant à l'issue de la deuxième étape, on réitère l'étape de centrage, et éventuellement l'étape de rééquilibrage aussi souvent que nécessaire, pour obtenir un positionnement satisfaisant des arêtes supérieures 21, 27 relativement à la bande 1.

Afin de vérifier si le positionnement est satisfaisant, il est possible de faire fonctionner l'installation de revêtement 10 afin de vérifier, d'une part, que la bande 1 ne touche pas les arêtes supérieures 21, 27 lors de son défilement, et d'autre part, que le débit de déversement est bien équilibré entre les deux compartiments de déversement 25, 29.

Si des défauts de centrage ou d'horizontalité sont constatés à ce stade, l'installation 10 est arrêtée, et l'on procède à une nouvelle itération des étapes de centrage et de rééquilibrage.

Selon un mode de réalisation, préalablement à la première étape de centrage ci-dessus, l'horizontalité des arêtes supérieures 21, 27 est ajustée par l'intermédiaire du mécanisme d'ajustement de l'horizontalité de ces arêtes 21, 27. Plus particulièrement, au cours de cette étape, on agit sur l'axe de rotation A2 de sorte à ajuster son horizontalité.

A titre d'exemple, au cours de cette étape, la surface du bain 12 de métal liquide est choisie comme référence d'horizontalité pour la mise en œuvre de cet ajustement.

Le réglage de l'horizontalité des arêtes supérieures 21, 27 est notamment mis en œuvre après un remplacement du caisson de déversement 49.

En option, préalablement à la première étape de centrage ci-dessus, la gaine 13 est déplacée en translation le long de son axe de sorte à ajuster sa hauteur d'immersion dans le bain 12 de métal liquide. Un tel ajustement est connu et ne sera pas détaillé dans le cadre de cette demande de brevet.

On notera que l'invention s'applique à tout revêtement métallique par trempé.

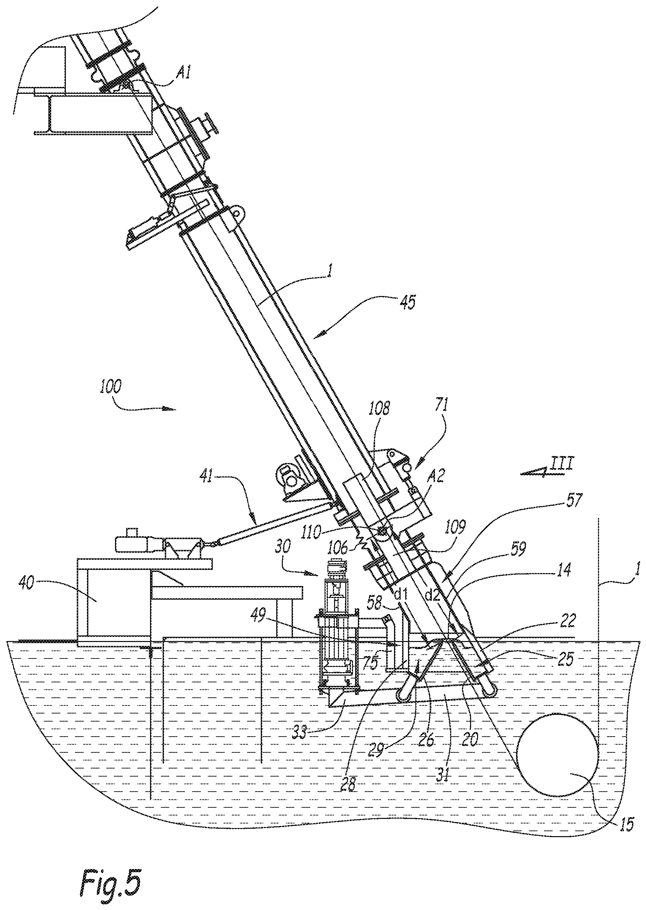

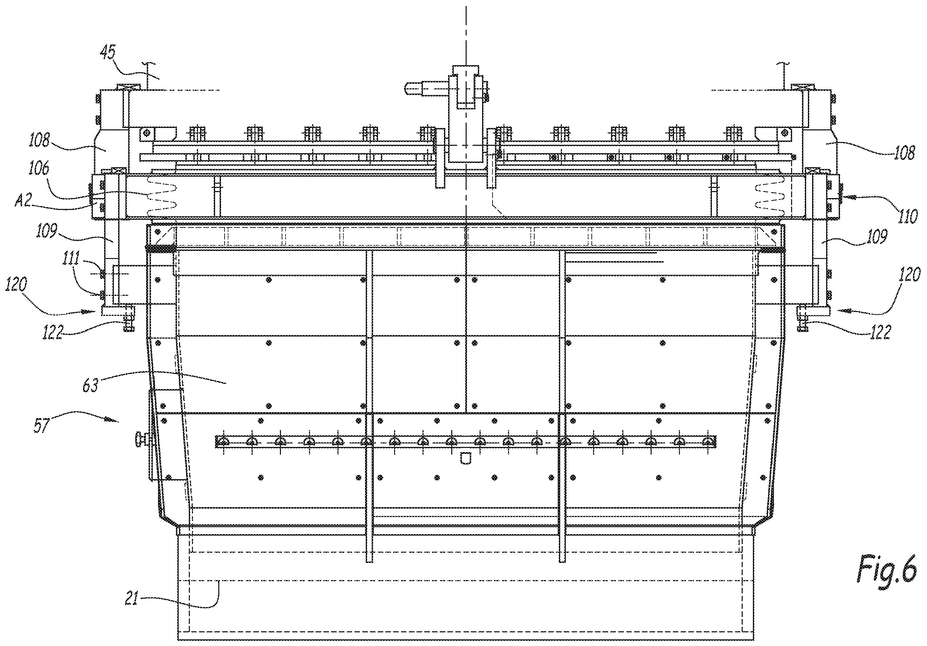

Une installation 100 selon un deuxième mode de réalisation sera maintenant décrite en référence aux figures 5 et 6. Seules les différences par rapport au premier mode de réalisation seront décrites. Sur les figures 5 et 6, les éléments identiques ou analogues portent des références numériques identiques à celles utilisées pour le premier mode de réalisation.

L'installation 100 selon le deuxième mode de réalisation diffère de l'installation 10 notamment par la localisation du deuxième axe de rotation A2.

Comme cela a été expliqué précédemment, dans le premier mode de réalisation, le caisson de déversement 49 est porté par la partie inférieure 57 de la gaine 13 en étant monté rotatif sur celle-ci autour du deuxième axe de rotation A2.

Dans l'installation 100 selon le deuxième mode de réalisation, et comme cela est représenté sur la figure 5, le caisson de déversement 49 est porté par la partie inférieure 57 de la gaine 13 en étant fixe par rapport à celle-ci. La partie inférieure 57 de la gaine 13 est, quant à elle, montée rotative sur la partie supérieure 45 de la gaine 13 autour d'un deuxième axe de rotation A2. Ainsi, le caisson de déversement 49 est mobile en rotation autour de l'axe de rotation A2 par rapport à la partie supérieure 45 de la gaine 13.

Plus particulièrement, dans ce mode de réalisation, les parois extérieures du caisson de déversement 49 qui forment les parois extérieures 22, 28 des compartiments de déversement 25, 29 sont formées par les parois latérales 58, 59 de la partie inférieure 57 de la gaine 13. Ainsi, le caisson de déversement 49 est, dans ce mode de réalisation, intégré à la partie inférieure 57 de la gaine 13.

Comme cela est représenté sur les figures 5 et 6, la partie inférieure 57 de la gaine 13 est articulée sur la partie supérieure 45 de la gaine 13 par l'intermédiaire d'une liaison pivot autorisant la rotation du caisson de déversement 49 par rapport à la partie supérieure 45 de la gaine 13 autour du deuxième axe de rotation A2.

Comme cela est représenté sur la figure 5, l'axe de rotation A2 traverse les parois de la gaine 13.

Dans cette installation 100, le deuxième axe de rotation A2 est localisé en-dehors du bain de métal liquide 12. En particulier, le deuxième axe de rotation A2 est localisé au-dessus des compartiments de déversement 25, 29.

En particulier, la distance d1, d2 entre le deuxième axe de rotation A2 et chacune des arêtes 21, 27 des compartiments de déversement 25, 29 est inférieure ou égale à 2500 mm. Cette distance est avantageusement comprise entre 800 mm et 1400 mm.

Plus particulièrement, l'installation 100 comprend deux tronçons d'arbre 110 définissant l'axe de rotation A2.

Dans l'exemple illustré sur les figures 5 et 6, l'articulation permettant la rotation autour du deuxième axe de rotation A2 est formée à l'extérieur du conduit de passage de la bande 1 délimité par la gaine 13. En particulier, elle est formée sur la gaine 13.

Dans cet exemple, la partie supérieure 45 de la gaine 13 est munie de deux bras d'articulation supérieurs 108. Chacun de ces bras d'articulation supérieurs 108 reçoit, à son extrémité inférieure, un tronçon d'arbre 110, ledit tronçon d'arbre 110 recevant à rotation un bras d'articulation inférieur 109 solidaire de la partie inférieure 57 de la gaine.

Les bras d'articulation 108, 109 se présentent plus particulièrement sous la forme de chapes d'articulation liées à rotation par l'intermédiaire du tronçon d'arbre 110.

En variante, tout autre mécanisme d'articulation créant une liaison pivot entre le caisson de déversement 49 et la partie supérieure 45 de la gaine 13 autour d'un axe de rotation A2 est envisageable.

Le deuxième actionneur 71 se présente sous la forme d'un vérin d'actionnement, disposé entre la partie inférieure 57 et la partie supérieure 45 de la gaine 13, de sorte à entraîner le caisson de déversement 49 en rotation autour du deuxième axe de rotation A2 par rapport à la partie supérieure 45 de la gaine 13. Le deuxième actionneur 71 est notamment d'un vérin à vis. Cependant, en alternative, le deuxième actionneur 71 est de tout autre type adapté, et comprend par exemple un vérin hydraulique ou pneumatique.

De même que dans le premier mode de réalisation, l'installation 100 comprend en outre un capteur de mesure configuré pour mesurer l'angle d'inclinaison du caisson de déversement 49 par rapport à l'horizontale et des moyens de commande du deuxième actionneur 71, configurés pour commander le deuxième actionneur 71 en fonction de l'angle d'inclinaison mesuré par le capteur de mesure 72.

Dans l'exemple représenté, l'installation 100 comprend en outre des moyens d'étanchéification 106, disposés entre l'extrémité inférieure de la partie supérieure 45 de la gaine 13 et l'extrémité supérieure de la partie inférieure 57. Les moyens d'étanchéification 106 sont configurés pour empêcher l'entrée d'air dans la gaine 13 depuis l'environnement. Ils comprennent par exemple un soufflet s'étendant entre l'extrémité inférieure de la partie supérieure 45 et l'extrémité supérieure de la partie inférieure 57 de la gaine 13.

Ce soufflet joue également un rôle de compensateur autorisant le mouvement relatif de la partie inférieure 57 par rapport à la partie supérieure 45 de la gaine 13.

L'installation 100 comprend en outre un mécanisme 120 d'ajustement de l'horizontalité des arêtes supérieures 21, 27 des parois intérieures 20, 26 des compartiments 25, 29.

Un exemple d'un tel mécanisme 120 est illustré plus particulièrement sur la figure 6. Dans cet exemple, le mécanisme 120 comprend, du côté de chacune des extrémités des arêtes supérieures 21, 27, au moins une vis d'ajustement 122 configurée pour régler la hauteur de ladite extrémité. Plus particulièrement, chaque vis d'ajustement 122 est configurée pour agir sur une partie correspondante de la partie inférieure 57 de la gaine 13.

Dans l'exemple représenté sur la figure 6, les vis d'ajustement 122 sont prévues au niveau du bras d'articulation inférieur 109 du mécanisme d'articulation de la partie inférieure 57 sur la partie supérieure 45 de la gaine 13. Elles sont disposées de telle sorte que leur vissage ou dévissage résulte en un déplacement vertical de la partie correspondante de la partie inférieure 57 par rapport au bras d'articulation inférieur 109, et ainsi, indirectement, en un ajustement de la hauteur des extrémités correspondantes des arêtes supérieures 21, 27. Dans cet exemple, le bras d'articulation inférieur 109 est solidarisé à la partie inférieure 57 par l'intermédiaire de vis de solidarisation 111 passant dans des orifices oblongs du bras d'articulation inférieur 109, permettant ainsi l'ajustement en position de la partie inférieure 57 par rapport au bras d'articulation inférieur 109.

Dans ce mode de réalisation, la partie inférieure 57 comprend un tronçon supérieur et un tronçon inférieur, fixé sur le tronçon supérieur. Le tronçon supérieur n'est pas destiné à être immergé dans le bain de métal liquide 12. Le tronçon inférieur est destiné à être immergé au moins partiellement dans le bain de métal liquide 12. Le tronçon inférieur est notamment rapporté sur le tronçon supérieur par soudage. Les parois extérieures 22, 28 des compartiments 25, 29 de déversement sont formées par les parois latérales du tronçon inférieur de ladite partie inférieure 57.

Comme cela est représenté sur la figure 5, la pompe 30 est partiellement immergée dans le bain de métal liquide 12. Elle est solidaire en rotation du caisson de déversement 49 par l'intermédiaire d'un châssis 75 fixé sur la partie inférieure 57 de la gaine 13. Les tubulures d'aspiration 31, 32 sont fixées rigidement entre la pompe 30 et le caisson de déversement 49. Ainsi, la pompe 30 et les tubulures d'aspiration 31, 32 sont mobiles en rotation avec le caisson de déversement 49 autour du premier axe de rotation A1 par rapport au bâti 40 de l'installation 100 et autour du deuxième axe de rotation A2 par rapport à la partie supérieure 45 de la gaine 13.

Dans le mode de réalisation illustré sur la figure 5, les orientations des parois intérieures 20, 26 et extérieures 22, 28 des compartiments 25, 29 sont analogues à celles décrites en regard du premier mode de réalisation, et engendrent les mêmes avantages.

L'installation 100 selon le deuxième mode de réalisation présente la plupart des avantages apportés par l'installation 10 selon le premier mode de réalisation.

De plus, dans ce mode de réalisation, la localisation du deuxième axe de rotation A2 en-dehors du bain de métal liquide 12 est avantageuse, car elle évite d'avoir à réaliser l'étanchéité entre le caisson de déversement 49 et la descente principale 45 dans le bain de métal liquide.

En revanche, dans ce mode de réalisation, compte tenu de la localisation du deuxième axe de rotation A2, la distance entre le deuxième axe de rotation A2 et les arêtes 21, 27 des compartiments de déversement 25, 29 est supérieure à cette distance dans le premier mode de réalisation, ce qui risque d'augmenter l'encombrement global de l'équipement 100.

Le procédé de réglage de l'installation 100 selon le deuxième mode de réalisation est analogue au procédé de réglage de l'installation 10 selon le premier mode de réalisation. On notera cependant qu'au cours de l'étape de rééquilibrage des débits, plus particulièrement, la partie inférieure 57 de la gaine 13 munie de son caisson de déversement 49 est entraînée en rotation autour du deuxième axe de rotation A2 par rapport à la partie supérieure 45 de la gaine 13.

Avantageusement, le procédé de réglage de l'installation 100 comprend en outre une étape d'ajustement de l'horizontalité des arêtes supérieures 21, 27 par l'intermédiaire du mécanisme de réglage 120. En particulier, cette étape comprend le vissage ou le dévissage des vis d'ajustement 122 en fonction d'un éventuel défaut d'horizontalité des arêtes 21, 27 observé de sorte à rétablir l'horizontalité des arêtes 21, 27.

Ce réglage est notamment mis en œuvre en prenant la surface du bain 12 de métal liquide comme référence d'horizontalité.

Il est réalisé par un opérateur, qui peut être une personne physique ou un automatisme.

Le réglage de l'horizontalité des arêtes supérieures 21, 27 est notamment mis en œuvre après un remplacement de la partie inférieure 57 de la gaine 13 munie de son caisson de déversement 49.

A l'issue de l'étape de réglage de l'horizontalité, chacune des arêtes supérieures 21, 27 s'étend horizontalement.

On notera que l'invention décrite ci-dessus en regard des figures 1 à 6 présente deux aspects, à savoir d'une part le caractère pivotant de la gaine 13 et du caisson de déversement 49 autour du premier axe de rotation A1 et le montage à rotation du caisson de déversement 49 par rapport à la partie supérieure 45 de la gaine 13 autour du deuxième axe de rotation A2, ainsi que les caractéristiques liées au réglage de l'installation 10, 100 qui en découlent, et d'autre part la forme particulière des compartiments de déversement 25, 29.

Comme cela a été expliqué précédemment, les caractéristiques liées au premier aspect permettent de réaliser de manière simple, flexible et précise, le centrage de la bande 1 dans la gaine 13 et l'équilibrage des débits de déversement dans les deux compartiments, résultant ainsi en une excellente qualité d'aspect du revêtement sur chacune de ses faces.

Par ailleurs, les caractéristiques liées au deuxième aspect, et en particulier l'orientation de la paroi extérieure 28 du compartiment 29, permettent de réduire les risques d'éclaboussures de métal liquide sur la bande 1, contribuant ainsi également à améliorer la qualité d'aspect du revêtement sur les deux faces de la bande, et en particulier sur la face de la bande orientée à l'opposé du rouleau de fond 15.

Bien que ces deux aspects ont été décrits en combinaison en regard des figures 1 à 6, le deuxième aspect peut être mis en œuvre indépendamment du premier aspect, le deuxième aspect, pris seul, contribuant déjà à une amélioration significative de la qualité du revêtement.

Mis en œuvre conjointement, les deux aspects de la présente invention conduisent à une qualité d'aspect du revêtement de la bande sur chacune de ses faces encore meilleure que lorsqu'un seul de ces aspects est mis en œuvre.

**Revendications**

1. Installation (10 ;100) de revêtement au trempé en continu d'une bande métallique (1), comprenant :

   - une cuve (11) contenant un bain de métal liquide (12),
   - un rouleau de fond (15) disposé dans la cuve (11) et immergé dans le bain de métal liquide (12),
   - une gaine (13) de défilement de la bande métallique (1) comprenant une extrémité inférieure immergée dans le bain de métal liquide (12) pour déterminer avec la surface dudit bain (12) et à l'intérieur de cette gaine (13), un joint de métal liquide (14),
   la gaine (13) portant, à son extrémité inférieure, un caisson de déversement (49) délimitant un compartiment de déversement de métal liquide avant (25), localisé du côté de la face de la bande métallique (1) placée du côté du rouleau de fond (15) et un compartiment de déversement de métal liquide arrière (29), localisé en regard de la face de la bande métallique (1) placée à l'opposé du rouleau de fond (15), chaque compartiment de déversement (25, 29) étant délimité intérieurement par une paroi intérieure (20, 26) et extérieurement par une paroi extérieure (22, 28), l'arête supérieure (21 ;27) de chaque paroi intérieure (20, 26) étant disposée en-dessous de la surface de joint liquide (14) pour réaliser un écoulement depuis ladite surface (14) dans chacun desdits compartiments de déversement (25 ;29),
   la paroi extérieure (28) du compartiment de déversement (29) arrière étant configurée pour former avec le plan de passage de la bande métallique (1) un angle ($\alpha$) supérieur ou égal à 15° en configuration d'utilisation.

2. Installation (10 ; 100) selon la revendication 1, dans laquelle la paroi extérieure (28) du compartiment de déversement arrière (29) est configurée pour être verticale en configuration d'utilisation.

3. Installation (10 ;100) selon l'une quelconque des revendications précédentes, dans laquelle la paroi intérieure (26) du compartiment de déversement arrière (29) est inclinée de sorte à s'écarter d'un plan vertical passant par son arête supérieure (27), depuis son arête supérieure (27) en direction du fond du compartiment (29).

4. Installation (10 ;100) selon l'une quelconque des revendications précédentes, dans laquelle la paroi intérieure (26) du compartiment de déversement arrière (29) est configurée pour former avec la verticale un angle ($\varepsilon1$) supérieur ou égal à 15° en configuration d'utilisation.

5. Installation (10 ;100) selon l'une quelconque des revendications précédentes, dans laquelle la paroi intérieure (20) du compartiment de déversement avant (25) est configurée pour former avec la verticale un angle ($\varepsilon2$) supérieur ou égal à 15° en configuration d'utilisation.

6. Installation (10 ;100) selon l'une quelconque des revendications précédentes, dans laquelle la paroi intérieure (20) du compartiment de déversement avant (25) est configurée pour former, en configuration d'utilisation, un angle ($\varepsilon2$) avec la verticale strictement supérieur à l'angle ($\alpha_0$) formé entre le plan de passage de la bande (1) et la verticale.

**7.** Installation (10 ;100) selon l'une quelconque des revendications précédentes, dans laquelle les parois intérieures (20, 26) des compartiments de déversement avant (25) et arrière (29) sont effilées au niveau de leurs arêtes supérieures (21, 27).

**8.** Installation (10 ;100) de revêtement selon l'une quelconque des revendications précédentes, dans laquelle la gaine (13) comprend une partie supérieure (45) et une partie inférieure (57), la partie inférieure (57) portant le caisson de déversement (49), et dans laquelle la gaine (13) munie du caisson de déversement (49) est mobile en rotation par rapport à la bande métallique (1) autour d'un premier axe de rotation (A1) et le caisson de déversement (49) est mobile en rotation par rapport à la partie supérieure (45) de la gaine (13) autour d'un deuxième axe de rotation (A2).

**9.** Installation (10 ;100) de revêtement selon la revendication 9, dans laquelle l'articulation permettant la rotation du caisson de déversement (49) par rapport à la partie supérieure (45) de la gaine (13) est une liaison pivot.

**10.** Installation (10 ; 100) selon l'une quelconque des revendications précédentes, laquelle comprend en outre un mécanisme (120) d'ajustement de l'horizontalité des arêtes supérieures (21, 27) des parois intérieures (20, 26) des compartiments de déversement (25, 29).

**11.** Installation (100) de revêtement selon l'une quelconque des revendications 8 à 10, dans laquelle le caisson de déversement (49) est fixe par rapport à la partie inférieure (57) de la gaine (13) et la partie inférieure (57) de la gaine (13) est montée mobile en rotation autour du deuxième axe de rotation (A2) sur la partie supérieure (45) de la gaine (13).

**12.** Installation (10) de revêtement selon l'une quelconque des revendications 8 à 10, dans laquelle le caisson de déversement (49) est monté rotatif sur la partie inférieure (57) de la gaine (13).

**13.** Procédé de revêtement par trempé en continu d'une bande métallique (1) au moyen d'une installation de revêtement (10 ;100) selon l'une quelconque des revendications précédentes.

**14.** Procédé de revêtement selon la revendication 13, au cours duquel on dépose sur la bande métallique (1) un revêtement comprenant du zinc et de l'aluminium, notamment un revêtement Aluminium-Zinc, comprenant par exemple 55% en poids d'aluminium, 43,5% en poids de zinc et 1,5% en poids de silicium.

**15.** Procédé selon la revendication 13, au cours duquel on dépose sur la bande métallique (1) un revêtement à base de zinc et comprenant de l'aluminium.

**16.** Procédé selon la revendication 15, au cours duquel on dépose sur la bande métallique (1) un revêtement comprenant entre 0,1 à 0,3% d'aluminium.

**17.** Procédé selon la revendication 15, au cours duquel on dépose sur la bande métallique (1) un revêtement comprenant 5% d'aluminium, le reste étant du zinc.

**18.** Procédé selon la revendication 15, au cours duquel on dépose sur la bande métallique (1) un revêtement à base de zinc et comprenant du magnésium et éventuellement l'aluminium, et comprenant de préférence de 0,1 à 20% en poids d'aluminium et de 0,1 à 10% en poids de magnésium.

**19.** Procédé selon la revendication 13, au cours duquel on dépose sur la bande métallique (1) un revêtement à base d'aluminium et comprenant du silicium et du fer, en particulier un revêtement présentant la composition suivante :

$$8\% \leq Si \leq 11\%$$

$$2\% \leq Fe \leq 4\%,$$

le reste étant de l'aluminium et d'éventuelles impuretés.

**20.** Procédé de revêtement selon l'une quelconque des revendications 13 à 19, dans lequel la paroi extérieure (28) du compartiment de déversement (29) arrière forme avec la bande métallique (1) un angle ($\alpha$) supérieur ou égal à 15° lors du revêtement de ladite bande métallique.

**21.** Procédé de revêtement selon l'une quelconque des revendications 13 à 20, dans lequel la paroi intérieure (26) du compartiment de déversement arrière (29) est inclinée de sorte à s'écarter d'un plan vertical passant par son arête supérieure (27) depuis son arête supérieure (27) en direction du fond du compartiment (29) lors du revêtement de ladite bande métallique.

**22.** Procédé de revêtement selon l'une quelconque des revendications 13 à 21, dans laquelle la paroi intérieure (26) du compartiment de déversement arrière (29) forme avec la verticale un angle ($\varepsilon 1$) supérieur ou égal à 15° lors du revêtement de ladite bande métallique.

**23.** Procédé (10 ;100) selon l'une quelconque des revendications 13 à 22, dans laquelle la paroi intérieure (20) du compartiment de déversement avant (25) forme avec la verticale un angle ($\varepsilon$2) supérieur ou égal à 15° lors du revêtement de ladite bande métallique.

24. Procédé (10 ;100) selon l'une quelconque des revendications 13 à 23, dans laquelle la paroi intérieure (20) du compartiment de déversement avant (25) forme, en configuration d'utilisation, un angle ($\varepsilon$2) avec la verticale strictement supérieur à l'angle ($\alpha_0$) formé entre la bande (1) et la verticale.

**Patentansprüche**

1. Einrichtung (10; 100) zum kontinuierlichen Tauchbeschichten eines Metallbands (1), aufweisend:

    - einen Tank (11), welcher ein Bad aus flüssigem Metall (12) beinhaltet,
    - eine untere Rolle (15), welche in dem Tank (11) angeordnet ist und in dem Bad aus flüssigem Metall (12) untergetaucht ist,
    - eine Hülle (13) zum Verschieben des Metallbands (1), welche ein unteres Ende aufweist, welches in dem Bad aus flüssigem Metall (12) untergetaucht ist, um mit der Oberfläche des Bads (12) und im Inneren der Hülle (13) eine Abdichtung aus flüssigen Metalls (14) festzulegen,
    wobei die Hülle (13) an deren unteren Ende einen Ableitkasten (49) trägt, welcher eine vordere Ableitkammer des flüssigen Metalls (25), welche auf einer Seite der Fläche des Metallbands (1), welche sich auf der Seite der unteren Rolle (15) befindet, angeordnet ist, und eine hintere Ableitkammer des flüssigen Metalls (29), welche der unteren Rolle (15) gegenüberliegend platzierten Fläche des Metallbands (1) zugewandt angeordnet ist, begrenzt, wobei jede Ableitkammer (25, 29) innen durch eine Innenwand (20, 26) und außen durch eine Außenwand (22, 28) begrenzt ist, wobei die obere Kante (21; 27) jeder Innenwand (20, 26) unterhalb der Oberfläche der Flüssigkeitsabdichtung angeordnet ist, um eine Strömung von der Oberfläche (14) aus in jede der Ableitkammern (25, 29) zu realisieren, wobei die Außenwand (28) der hinteren Ableitkammer (29) dazu eingerichtet ist, in einer Benutzungskonfiguration einen Winkel ($\alpha$), welcher größer oder gleich 15° ist, mit der Durchlaufebene des Metallbands (1) zu bilden.

2. Einrichtung (10; 100) nach dem Anspruch 1, wobei die Außenwand (28) der hinteren Ableitkammer (29) dazu eingerichtet ist, in der Benutzungskonfiguration vertikal zu sein.

3. Einrichtung (10; 100) nach irgendeinem der vorhergehenden Ansprüche, wobei die Innenwand (26) der hinteren Ableitkammer (29) so von ihrer oberen Kante (27) aus in Richtung hin zum Boden der Kammer (29) geneigt ist, dass sie sich von einer Vertikalebene, welche durch ihre obere Kante (27) verläuft, entfernt.

4. Einrichtung (10; 100) nach irgendeinem der vorhergehenden Ansprüche, wobei die Innenwand (26) der hinteren Ableitkammer (29) dazu eingerichtet ist, in Benutzungskonfiguration einen Winkel ($\varepsilon$1), welcher größer oder gleich 15° ist, mit der Vertikalen zu bilden.

5. Einrichtung (10; 100) nach irgendeinem der vorhergehenden Ansprüche, wobei die Innenwand (20) der vorderen Ableitkammer (25) dazu eingerichtet ist, in Benutzungskonfiguration einen Winkel ($\varepsilon$2), welcher größer oder gleich 15° ist, mit der Vertikalen zu bilden.

6. Einrichtung (10; 100) nach irgendeinem der vorhergehenden Ansprüche, wobei die Innenwand (20) der vorderen Ableitkammer (25) dazu eingerichtet ist, in Benutzungskonfiguration einen Winkel ($\varepsilon$2) mit der Vertikalen zu bilden, welcher streng größer als der Winkel ($\alpha_0$), welcher zwischen der Durchlaufebene des Bands (1) und der Vertikalen ausgebildet ist, ist.

7. Einrichtung (10; 100) nach irgendeinem der vorhergehenden Ansprüche, wobei die Innenwände (20, 26) der vorderen (25) und der hinteren (29) Ableitkammer auf Höhe ihrer oberen Kanten (21, 27) zugespitzt sind.

8. Einrichtung (10; 100) zur Beschichtung nach irgendeinem der vorhergehenden Ansprüche, wobei die Hülle (13) aufweist einen oberen Abschnitt (45) und einen unteren Abschnitt (57), wobei der untere Abschnitt (57) den Ableitkasten (49) trägt, und wobei die mit dem Ableitkasten (49) versehene Hülle (13) bezüglich des Metallbands (1) um eine erste Rotationsachse (A1) drehbeweglich ist und der Ableitkasten (49) bezüglich des oberen Abschnitts (45) der Hülle (13) um eine zweite Rotationsachse (A2) drehbeweglich ist.

9. Einrichtung (10; 100) nach dem Anspruch 8, wobei das Gelenk, welches die Rotation des Ableitkastens (49) bezüglich des oberen Abschnitts (45) der Hülle (13) erlaubt, eine Schwenkverbindung ist.

10. Einrichtung (10; 100) nach irgendeinem der vorhergehenden Ansprüche, welcher ferner aufweist einen Mechanismus (120) zur Einstellung der Horizontalität der oberen Kanten (21, 27) der Innenwände (20, 26) der Ableitkammern (25, 29).

**11.** Einrichtung (10; 100) zur Beschichtung nach irgendeinem der Ansprüche 8 bis 10, wobei der Ableitkasten (49) bezüglich des unteren Abschnitts (57) der Hülle (13) fixiert ist und der untere Abschnitt (57) der Hülle (13) drehbeweglich um die zweite Rotationsachse (A2) an dem oberen Abschnitt (45) der Hülle (13) angebracht ist.

**12.** Einrichtung (10; 100) zur Beschichtung nach irgendeinem der Ansprüche 8 bis 10, wobei der Ableitkasten (49) drehbar an dem unteren Abschnitt (57) der Hülle (13) angebracht ist.

**13.** Verfahren zum kontinuierlichen Tauchbeschichten eines Metallbands (1) mittels einer Einrichtung (10; 100) zur Beschichtung nach irgendeinem der vorhergehenden Ansprüche.

**14.** Verfahren zum Beschichten nach dem Anspruch 13, in dessen Verlauf auf dem Metallband (1) eine Beschichtung, welche Zink und Aluminium aufweist, insbesondere eine Aluminium-Zink-Beschichtung, aufweisend beispielsweise 55 Gewichtsprozent an Aluminium, 43,5 Gewichtsprozent an Zink und 1,5 Gewichtsprozent an Silizium, aufgebracht wird.

**15.** Verfahren gemäß dem Anspruch 13, in dessen Verlauf auf dem Metallband (1) eine auf Zink basierte und Aluminium aufweisende Beschichtung aufgebracht wird.

**16.** Verfahren gemäß dem Anspruch 15, in dessen Verlauf auf dem Metallband (1) eine Beschichtung, welche zwischen 0,1 bis 0,3% an Aluminium aufweist, aufgebracht wird.

**17.** Verfahren gemäß dem Anspruch 15, in dessen Verlauf auf dem Metallband (1) eine Beschichtung, welche zwischen 5% an Aluminium aufweist, wobei der Rest Zink ist, aufgebracht wird.

**18.** Verfahren gemäß dem Anspruch 15, in dessen Verlauf auf dem Metallband (1) eine Beschichtung, welche auf Zink basiert und Magnesium und gegebenenfalls Aluminium aufweist und welche vorzugsweise 0,1 bis 20 Gewichtsprozent an Aluminium und 0,1 bis 10 Gewichtsprozent an Magnesium aufweist, aufgebracht wird.

**19.** Verfahren gemäß dem Anspruch 13, in dessen Verlauf auf dem Metallband (1) eine auf Aluminium basierte und Silicium und Eisen aufweisende Beschichtung aufgebracht wird, insbesondere eine Beschichtung, welche die folgende Zusammensetzung aufweist:

$$8\% \leq Si \leq 11\%$$

$$2\% \leq Fe \leq 4\%$$

wobei der Rest Aluminium und mögliche Verunreinigungen ist.

**20.** Verfahren zum Beschichten gemäß irgendeinem der Ansprüche 13 bis 19, wobei die Außenwand (28) der hinteren Ableitkammer (29) während der Beschichtung des Metallbands einen Winkel ($\alpha$) größer oder gleich 15° mit dem Metallband (1) bildet.

**21.** Verfahren zum Beschichten gemäß irgendeinem der Ansprüche 13 bis 20, wobei die Innenwand (26) der hinteren Ableitkammer (29) so von ihrer oberen Kante (27) aus in Richtung hin zum Boden der Kammer (29) während der Beschichtung des Metallbands geneigt ist, dass sie sich von einer Vertikalebene, welche durch ihre obere Kante (27) verläuft, entfernt.

**22.** Verfahren zum Beschichten gemäß irgendeinem der Ansprüche 13 bis 21, wobei die Innenwand (26) der hinteren Ableitkammer (29) einen Winkel ($\varepsilon 1$), welcher größer oder gleich 15° ist, mit der Vertikalen während der Beschichtung des Metallbands bildet.

**23.** Verfahren zum Beschichten gemäß irgendeinem der Ansprüche 13 bis 22, wobei die Innenwand (20) der vorderen Ableitkammer (25) einen Winkel ($\varepsilon 2$), welcher größer oder gleich 15° ist, mit der Vertikalen während der Beschichtung des Metallbands bildet.

**24.** Verfahren zum Beschichten gemäß irgendeinem der Ansprüche 13 bis 22, wobei die Innenwand (20) der vorderen Ableitkammer (25) in Benutzungskonfiguration einen Winkel ($\varepsilon 2$) mit der Vertikalen bildet, welcher streng größer als der Winkel ($\alpha_0$), welcher zwischen dem Band (1) und der Vertikalen ausgebildet ist, ist.

**Claims**

**1.** An apparatus (10; 100) for the continuous hot dip coating of a metal strip (1), including:

- a vessel (11) containing a liquid metal bath (12),
- a bottom roller (15) arranged in the vessel (11) and immersed in the liquid metal bath (12),
- a displacement casing (13) for the metal strip (1) including a lower end immersed in the liquid metal bath (12) to determine, with the surface of said bath (12) and the inside of said casing (13), a liquid metal seal (14), the casing (13) carrying, at its lower end, a pouring box (49) delimiting a front pouring compartment (25) for liquid metal, located on the side of the face of the metal strip (1) placed on the side of the bottom roller (15) and a rear pouring compartment (29) for liquid metal, located facing the face of the metal strip (1) which is not located on the side of the bottom roller (15), each pouring compartment (25, 29) being inwardly delimited by an inner wall (20, 26) and outwardly by an outer wall (22, 28), the upper rim (21; 27) of each inner wall (20, 26) being arranged below the liquid seal surface (14) to perform a flow from said surface (14) in each of said pouring compartments (25; 29),

the outer wall (28) of the rear pouring compartment (29) being configured to form, with the passage plane of the metal strip (1), an angle ($\alpha$) greater than or equal to 15° in a usage configuration.

2. The apparatus (10; 100) according to claim 1, wherein the outer wall (28) of the rear pouring compartment (29) is configured to be vertical in the usage configuration.

3. The apparatus (10; 100) according to any one of the preceding claims, wherein the inner wall (26) of the pouring compartment (29) is angled so as to move away from a vertical plane passing through its upper rim (27), from its upper rim (27) toward the bottom of the compartment (29).

4. The apparatus (10; 100) according to any one of the preceding claims, wherein the inner wall (26) of the rear pouring compartment (29) is configured to form, with the vertical, an angle ($\varepsilon 1$) greater than or equal to 15° in the usage configuration.

5. The apparatus (10; 100) according to any one of the preceding claims, wherein the inner wall (20) of the front pouring compartment (25) is configured to form, with the vertical, an angle ($\varepsilon 2$) greater than or equal to 15° in the usage configuration.

6. The apparatus (10; 100) according to any one of the preceding claims, wherein the inner wall (20) of the front pouring compartment (25) is configured to form, in the usage configuration, an angle ($\varepsilon 2$) with the vertical strictly greater than the angle ($\alpha_0$) formed between the passage plane of the strip (1) and the vertical.

7. The apparatus (10; 100) according to any one of the preceding claims, wherein the inner walls (20, 26) of the front (25) and rear (29) pouring compartments are tapered at their upper rims (21, 27).

8. The coating apparatus (10; 100) according to any one of the preceding claims, wherein the casing (13) includes an upper portion (45) and a lower portion (57), the lower portion (57) carrying the pouring box (49), and wherein the casing (13) provided with the pouring box (49) is rotatable relative to the metal strip (1) around a first rotation axis (A1) and the pouring box (49) is rotatable relative to the upper portion (45) of the casing (13) around a second rotation axis (A2).

9. The coating apparatus (10; 100) according to claim 9, wherein the articulation allowing the rotation of the pouring box (49) relative to the upper portion (45) of the casing (13) is a pivot link.

10. The apparatus (10; 100) according to any one of the preceding claims, which further includes a mechanism (120) for adjusting the horizontality of the upper rims (21, 27) of the inner walls (20, 26) of the pouring compartments (25, 29).

11. The coating apparatus (100) according to any one of claims 8 to 10, wherein the pouring box (49) is stationary relative to the lower portion (57) of the casing (13) and the lower portion (57) of the casing (13) is mounted rotatable around the second rotation axis (A2) on the upper portion (45) of the casing (13).

12. The coating apparatus (10) according to any one of claims 8 to 10, wherein the pouring box (49) is mounted rotating on the lower portion (57) of the casing (13).

13. A method for continuous hot dip coating of a metal strip (1) using a coating apparatus (10; 100) according to any one of the preceding claims.

14. The coating method according to claim 13, during which a coating comprising zinc and aluminum, in particular an Aluminum-Zinc coating, for example comprising 55 wt% of aluminum, 43.5 wt% of zinc and 1.5 wt% of silicon is deposited on the metal strip (1).

15. The method according to claim 13, during which a zinc-based coating comprising aluminum is deposited on the metal strip (1).

16. The method according to claim 15, during which a coating comprising between 0.1 and 0.3% aluminum is deposited on the metal strip (1).

17. The method according to claim 15, during which a coating comprising 5% aluminum, the rest being zinc is deposited on the metal strip (1).

18. The method according to claim 15, during which a zinc-based coating comprising magnesium and optionally aluminum, and preferably comprising from 0.1 to 20 wt% of aluminum and from 0.1 to 10 wt% of magnesium is deposited on the metal strip (1)

19. The method according to claim 13, during which an aluminum-based coating comprising silicon and iron , in particular a coating having the following composition:

$$8\% \leq Si \leq 11\%$$

$$2\% \leq Fe \leq 4\%,$$

the rest being aluminum and possible impurities is deposited on the metal strip (1).

20. The coating method according to any one of claims 13 to 19, wherein the outer wall (28) of the rear pouring compartment (29) forms, with the metal strip (1), an angle ($\alpha$) greater than or equal to 15° during the coating of said metal strip.

21. The coating method according to any one of claims 13 to 20; wherein the inner wall (26) of the rear pouring compartment (29) is angled so as to move away from a vertical plane passing through its upper rim (27) from its upper rim (27) toward the bottom of the compartment (29) during the coating of said metal strip.

22. The coating method according to any one of claims 13 to 21, wherein the inner wall (26) of the rear pouring compartment (29) forms, with the vertical, an angle ($\varepsilon 1$) greater than or equal to 15° during the coating of said metal strip.

23. The method (10; 100) according to any one of claims 13 to 22, wherein the inner wall (20) of the front pouring compartment (25) forms, with the vertical, an angle ($\varepsilon 2$) greater than or equal to 15° during the coating of said metal strip.

24. The method (10; 100) according to any one of claims 13 to 23, wherein the inner wall (20) of the front pouring compartment (25) forms, in the usage configuration, an angle ($\varepsilon 2$) with the vertical strictly greater than the angle ($\alpha_0$) formed between the strip (1) and the vertical.

Fig.1

Fig.2

Fig.3

Fig.4

Fig.5

Fig.6

**RÉFÉRENCES CITÉES DANS LA DESCRIPTION**

**Documents brevets cités dans la description**

- EP 1339891 A
- WO 0238823 A
- KR 101533212